# EUROPEAN PATENT APPLICATION

(11) **EP 1 063 180 A1**
(43) Date of publication of application: **27.12.2000**
(21) Application number: 99202030.5
(22) Date of filing: 23.06.1999
(51) Int. Cl.: B65G 7/02, B65G 7/04

(54) **Load transfer platform**

(71) Applicant: UPLsystems, 3600 Genk (BE)
(72) Inventor: Bijnens, Frank, 3600 Genk (BE)
(74) Representative: Quintelier, Claude

(57) **Abstract**

A load transfer platform (1) having a frame and a wheelset (30), said frame comprising a first set of longitudinally extending beams (2-5) and a second set of transversally extending beams (6,7) connecting the longitudinally extending beams together, wherein said platform comprises first connection means (32) provided to co-operate with second connection means mounted on said wheelset, said first and second connection means being provided for detachably connecting said wheelset to a side of said frame provided to face a workfloor by an up- and downward movement of said frame.

## Description

The present invention relates to a load transfer platform having a frame and a wheelset, said frame comprising a first set of longitudinally extending beams and a second set of transversally extending beams connecting the longitudinally extending beams together.

Such a load transfer platform is known from US-PS-4.347.794. The known platform is used in cargo terminals or other stations where goods have to be handled. The use of the platform enables an easy transport of a large volume of goods generally of heavy weight. The beams enable to form a rigid platform suitable for carrying heavy goods. The wheelset is mounted on top of the platform and is provided for moving the goods on the platform.

A drawback of the known platform is that additional transport units, such as a fork-lift truck, are necessary to bring the platform from a place where the goods are stored to a place where the truck or other transport means stay. This could cause a damaging of the goods when the fork of the fork-lift truck is not correctly engaged into the platform. The use of a fork-lift truck also limits the manoeuvring flexibility of the platform in the trailer of a vehicle.

The object of the invention is to realise a platform enabling a larger flexibility in bringing the latter from and to a truck or other transport means.

To that purpose a load transfer platform according to the invention is characterised in that said platform comprises first connection means, provided to co-operate with second connection means, mounted on said wheelset, said first and second connection means being provided for detachably connecting said wheelset to a side of said frame provided to face a workfloor by an up- and downward movement of said frame. The connection means enable to connect and disconnect the wheelset from the frame. In such a manner the wheelset is connectable under the frame, when the latter needs to be moved from a loading place to a truck and disconnected once the platform is installed in the trailer.

A first preferred embodiment of a platform according to the invention is characterised in that it comprises an inflatable cushion mounted on said side-facing of said workfloor. This enables an easy up-and downward movement of the frame.

A second preferred embodiment of a platform according to the invention is characterised in that said first connection means are formed by a protrusion extending towards said workfloor and mounted on said longitudinally extending beams, said second connection means being formed by a cavity applied on a carrying element of said wheelset, said protrusion and said cavity mating each other. The connection and disconnection of the wheelset is thus easily and reliably realised.

A third preferred embodiment of a platform according to the invention is characterised in that said beams of said first set comprise a substantially rectangular shaped hollow chamber extending over a substantially whole length of the beam, said chamber extending between a first and a second substantially U-shaped anchorage element, wherein said first and second anchorage element are provided for receiving a clamping unit which is provided for clamping said beams of said first and second set to each other. The rectangular shape enables a rigid construction of the frame whereas the anchorage element enables a strong connection of the beams forming the frame.

A fourth preferred embodiment of a platform according to the invention is characterised in that said wheelset comprises a first and a second wheelsubset pivotally and longitudinally mounted on a first carrying arm, which is pivotally mounted on a carrying element provided with said second connection means. This enables the wheelset to easily ride over obstacles without affecting the load placed on the frame.

The invention will now be described in more details by means of the drawings illustrating a preferred embodiment of a load transfer platform according to the invention.

In the drawings :
figure 1 shows a top view of a platform according to the invention;
figure 2, 3 and 4 show respectively cross-sections along the lines II - II', III - III', and IV - IV' drawn in figure 1;
figure 5 shows a cross-section through a connection member enabling to connect the profiles of the first and second set;
figure 6 shows the connection between the frame and the wheelset;
figure 7 shows a cross-section through the wheelset; and
figure 8 and 9 show the storage unit for storing the wheelset.

In the drawings a same reference sign has been assigned to a same or analogous element.

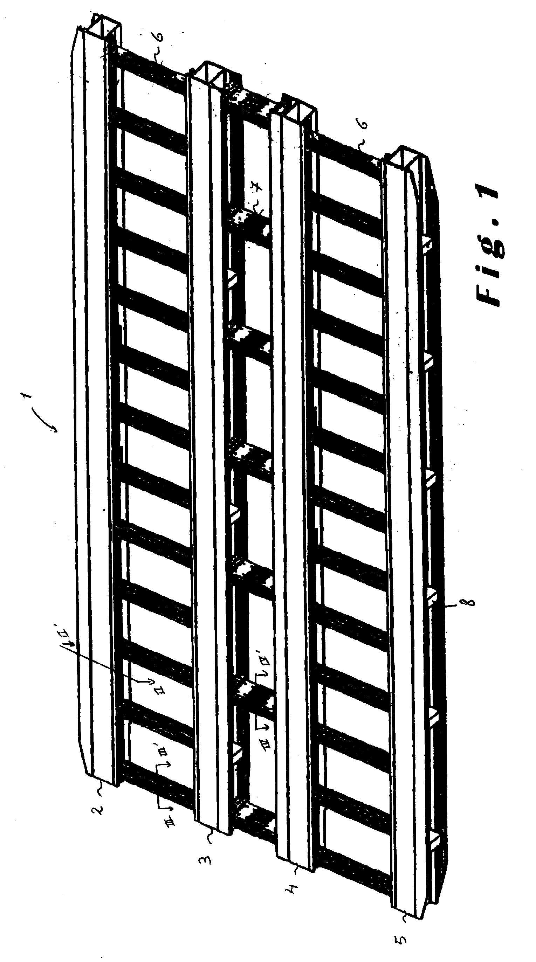

The load transfer platform 1, illustrated in figure 1, comprises a frame having a first set of longitudinally extending beams 2, 3, 4 and 5. Those latter beams are connected by a second set of transversally extending beams 6 and 7, which also form part of the frame. At their lateral outside, the longitudinal beams are preferably provided with winches 8 to which straps, preferably nylon straps, can be attached for fixing the load placed on top of the platform. The number of beams shown in figure 1 is of course only given by way of example and alternative embodiments with more or less beams are possible.

Preferably the beams are made of a light-weight metal such as for example extruded aluminium. The use of extruded aluminium has the advantage that a light-weight and very rigid frame is obtained, enabling to carry heavy loads of several tons.

As is illustrated in figure 2, which shows a cross-section along line II - II', the longitudinal beam 5 comprises a central substantially rectangular shaped hollow chamber 9, extending over substantially the whole length of the beam. This chamber extends between a first 10 and a second 12 substantially U-shaped anchorage element. The first anchorage element 10 extends over approximately one third of the height of the beam and is situated on a top side thereof. The second anchorage element 12 extends over the whole height of the beam.

Each of the first and second anchorage elements are provided with first protruding lips 14 applied on top of the U-shape and having an oblique angled extremity faced inwards the U-shape. Inside the U-shape a clamping unit 11, 13 can be inserted, which can be pulled against the protruding lips. Of course the dimension of the clamping unit is adapted to the one of the anchorage element in which it is applied. The clamping unit 11 is provided with one hole 15, whereas the clamping unit 13 is provided with two holes 15. Each of the holes being preferably provided with a screw thread for receiving a screw as will be described hereinafter.

The first anchorage element 10 is further provided with a second protrusion 16 situated adjacent the first protrusion 14. This second protrusion 16 creates a cavity 17 with the outer wall of the chamber 19. The second protrusion lip forms second connection means mating with the first connection means applied on a wheelset, as will be described hereinafter.

The second anchorage element 12 is also provided for carrying the winches 8 as illustrated with the dotted lines in figure 2. The winch comprises a drum 18 mounted on a plate 19 fixed with the anchorage element. The drum is provided to rotate and to be secured in order to fix the straps.

Preferably grooves 20 are applied on top of the longitudinal beams. Those grooves enable to insert a cushion element, preferably made of rubber, on which the load can rest. That cushion element exerts a friction on the load, thus reducing the possibility that the load could move when placed on the frame.

At the underside of the longitudinal beam, a space 21 is provided to apply an inflatable cushion 22, preferably held by a plurality of ribbons (not shown). The inflatable cushion enables to lift up the platform when compressed air or gas is blown into the cushion 22 and to get access to the bottom of the platform. The profiles 23 at the bottom of the beam are also provided with grooves 24 for inserting further cushion elements.

Figure 3 shows a cross-section along a line III - III' (figure 1) of the transversal beams 6 belonging to a first subset. Preferably those beams have a dimension in cross-section of 60 x 80 cm. The beams 6 of this first subset have a substantially H-shaped pattern, provided on both lateral sides with substantially U-shaped third anchorage element 25. The third anchorage elements have a comparable shape to the one of the first anchorage elements 10, but have a lesser depth. The third anchorage elements are also provided for receiving a clamping unit 11. As shown in figure 1, the beams of the first subset extend between the beams 2 and 3 respectively 4 and 5.

Figure 4 shows a cross-section along a line IV - IV' (figure 1) of the transversal beams 7 belonging to a second subset. Preferably those beams have a dimension in cross-section of 60 x 160 cm. The beams 7 of this second subset have a shape according to a pattern formed by a juxtaposition of two substantially H-shapes. As shown in figure 4, the two H-shapes are in fact formed by two superposed beams of the first subset, although extruded during a same extrusion process. The beams of the second subset have thus comparable properties to the one of the first set and will therefore not be described in more detail.

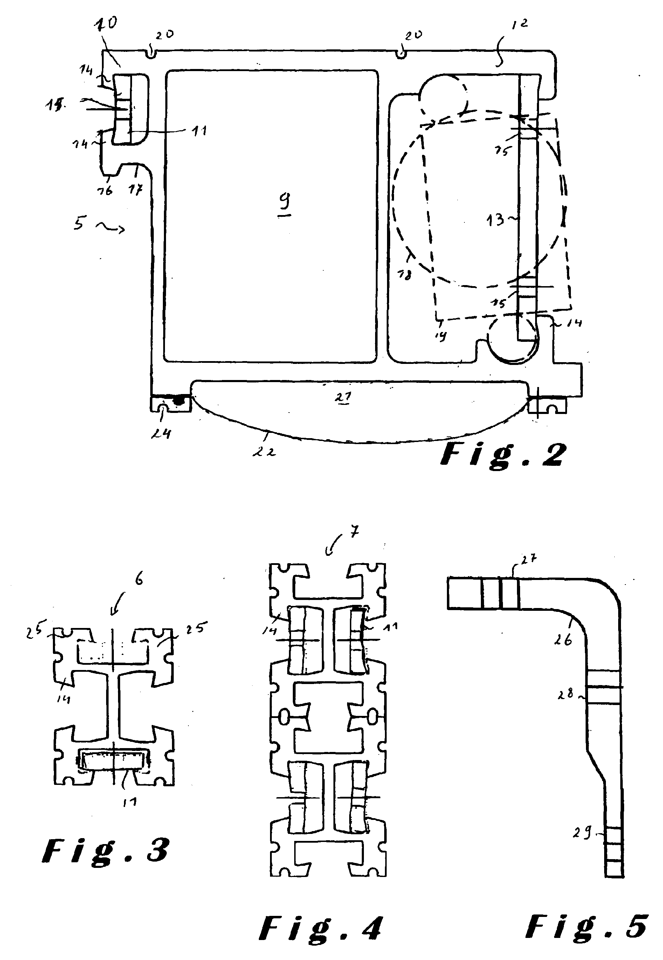

Figure 5 shows a connection member 26 provided to connect the first and second sets of beams together. The connection member is substantially L-shaped and provided with three holes 27, 28 and 29. The short leg of the L-shape has one hole, whereas the long leg has two holes. Upon connecting a longitudinal beam, for example beam 2, with a transversal beam 6, the short leg of the connection member 25 is placed along the beam 2 so that hole 27 faces the first anchorage element 10 and is aligned with hole 15. The long leg is placed along the beam 6, so that holes 28 and 29 face the clamping units 11 inside the third anchoring element 25. A bolt is passed through hole 27 in order to penetrate into clamping unit 11 placed on the first anchorage element 10. Bolts are passed through the respective holes 28 and 29, in order to penetrate in clamping unit 11 placed in the third anchorage elements. By tightening the bolts in the screw threads of the clamping unit, the beams are connected to each other. As the clamping units are preferably of rectangular shape, they will turn inside the anchorage element so as to block themselves. The oblique angled points of the protruding lips 14 will also cause somewhat penetration into the clamping unit when the latter is pulled towards the lips due to the tightening of the bolts and the nuts.

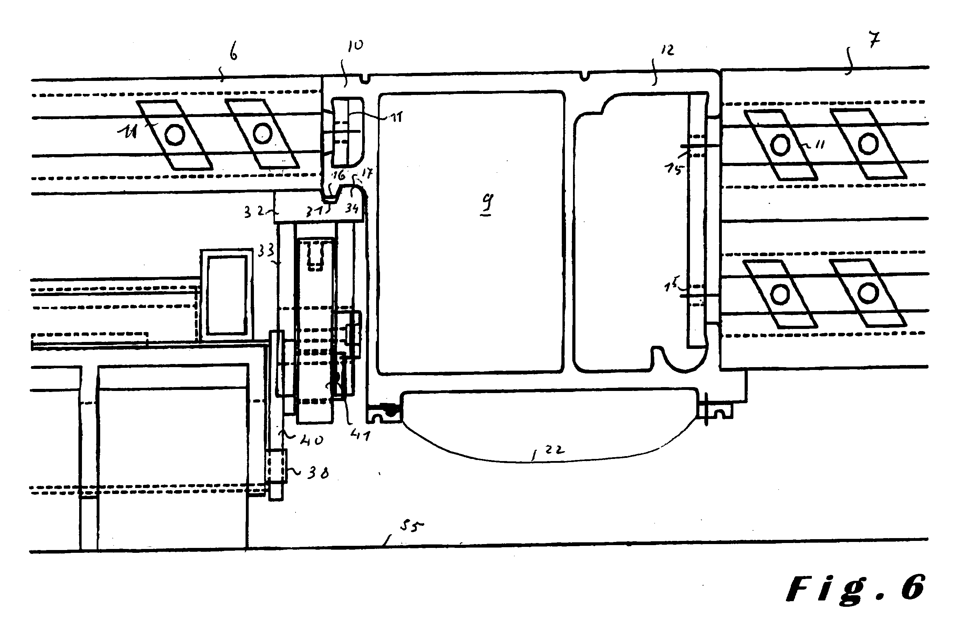

For connecting the longitudinal beams 3 and 4 with the transversal beams 7 of the second subset, the connecting member 26 is also used. However now two such connecting members are used in such a manner that a first one is connected with the upper part of the double H-shaped beam and a second one with the under part. The connecting members face each time one of the holes provided in clamping unit 11. Just as with the connection of the beam 2 with the first subset, bolts and nuts are used. The connection of the beams with each other is illustrated in figure 6.

By using the double shaped H (second subset) in the central axis of the frame 1 and the single shaped H (first subset), the strongest connection is obtained in the central part of the platform. This enables that the platform will not bend along its central axis due to a heavy load placed thereon. As the transversal beams 6 of the first subset have a longer length than the one of the second subset and as they are placed offset the central axis, they provide a good torque on the frame preventing in that way also a bending of the frame when heavy load is placed thereon. The use of the hollow chamber 9 also gives a strong rigidity to the transversal beams without causing the latter to have a heavy weight.

Figure 6 further shows how a wheelset 30 is connectable to the frame 1. The second protrusion 16 mates with a further cavity 31 provided on top of a first connection means 32 applied on an arm 33 of the wheelset 30. The cavity 17 applied on the first anchorage element 10 mates with the upper part of the first connection means 32 situated next to the further cavity 31. As the second protrusion 16 penetrates into the further cavity 31, a good connection is obtained. The gravity force takes care that the second protrusion 16 remains into the further cavity 31, as the wheelset 30 rests on a workfloor 35 and the frame 1 is placed on the wheelset.

The wheelset is also detachably connected to the frame by the use of the first and second connection means as shown in figure 6. As the second protrusion 16 simply engages into the further cavity 31 without any permanent connection, the wheelset can be easily disconnected from the frame. For this purpose the frame is lifted up from the workfloor or the ground, preferably by use of the inflatable cushion 22. However alternative embodiments could be used to realise the up-and downward movement of the frame, such as for example a pneumatic jack. By inflating gas into the inflatable cushion 22, the frame is tilted up in such a manner that the wheelset can be moved under the frame and brought to or from the second connection means. As the second protrusion is situated at an upper side of the first beams, the up- and downward movement can remain limited to 10 cm at the most.

When the frame is tilted up, the wheelset can be brought under the frame and be adjusted so that the further cavity 31 is placed under the second protrusion 16. Releasing the gas from the cushion 22, will cause a downward movement of the frame and cause the second protrusion 16 to engage into the further cavity 31, whereas the top side 34 will engage into cavity 17. For removing the wheelset, it is only necessary to apply gas in the inflatable cushion and to lift up the frame in order to disengage the second protrusion and the further cavity.

The detachable connection of the wheelset from the frame enables to apply the wheelset on the frame only when necessary i.e. during transport of the platform from a storage place to a truck or train and vice versa. Once the platform is on the truck, train, boat or at the storage place, the wheelset is removed. The application of the wheelset enables an easy movement of the platform without damaging the goods stored thereon, as all movements remain at the underside and without the need of a fork-lift truck. A reliable and easy transport of the platform is thus obtained.

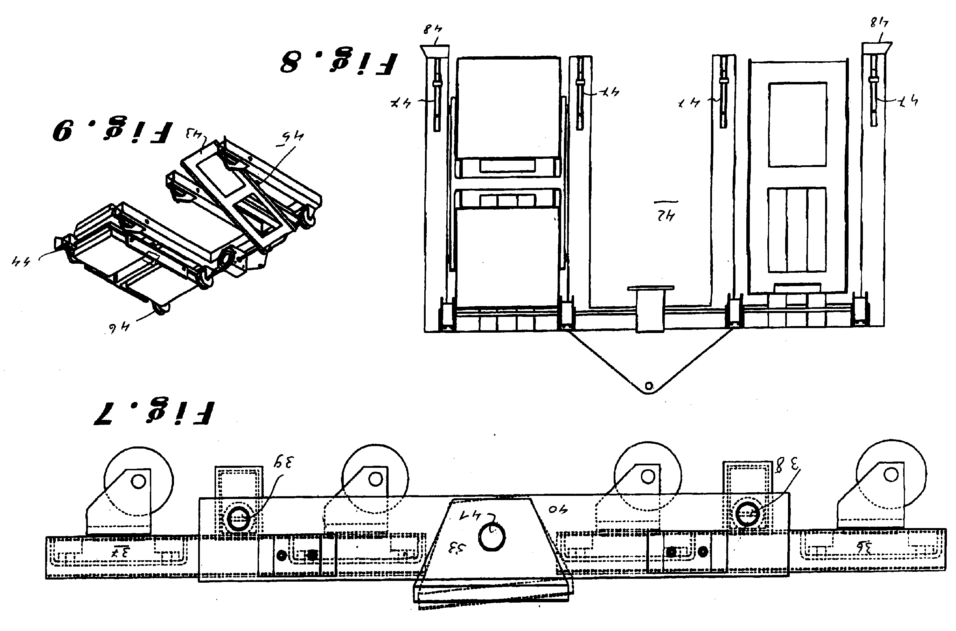

In order to enable a large flexibility of movement to the wheelset and to travel over obstacles on a workfloor such as bumps, the wheelset is preferably provided with a first 36 and a second 37 wheelsubset, as illustrated in figure 7. Each wheelsubset preferably comprises eight wheels ie. two sets of four wheels. Wheelset 36, respectively 37, is pivotally mounted on a carrying element 40 and pivots around axis 38 respectively 39. The wheelsubsets are disposed in the longitudinal direction of the frame and extend perpendicular to the first set of beams. The carrying element is pivotally mounted on arm 33 and pivots around axis 41. The arm 33 belongs to the first connection means as shown in figure 6.

In such a manner the first wheelsubset 36 respectively the second wheelsubset 37 pivot around their respective axis 38 and 39, thus enabling them to pivot independently from each other. So regardless from which wheelsubset first reaches an obstacle, the pivoting movement will enable the wheelset to overcome the obstacle without causing a torque inside the frame. The pivot axis 41 enables a transfer of the pivoting movement of one of the wheelsets to the other while taking care that the platform does not suffer from the abrupt movements. The two parallel pivot axes 38 and 39 enable that the wheels stay in contact with the floor during the travelling of the platform.

Preferably the wheelset is stored in a storage unit 42 shown in figures 8 and 9. The storage unit comprises two superposed trailer sets 43 and 44 in order to store two wheelsets one above the other. The trailer sets 43 and 44 are pivotally mounted around axis 45 and 46 in order to facilitate the loading and unloading of the wheelsets.

The storage unit 42 is preferably provided with a source of compressed gas 47 provided to be coupled to the frame and for supplying compressed gas to the inflatable cushion. In such a manner the gas source is available when the wheelset has to be mounted or dismounted from the platform. The storage unit is also provided with alignment means 48 provided to be engaged into the transversal beams of the frame. In such a manner the storage unit is aligned to the platform during mounting of the wheelset and thus facilitates this handling.

## Claims

1. A load transfer platform having a frame and a wheelset, said frame comprising a first set of longitudinally extending beams and a second set of transversally extending beams connecting the longitudinally extending beams together, characterised in that said platform comprises first connection means provided to co-operate with second connection means mounted on said wheelset, said first and second connection means being provided for detachably connecting said wheelset to a side of said frame provided to face a workfloor by an up-and downward movement of said frame.

2. A load transfer platform as claimed in claim 1, characterised in that it comprises an inflatable cushion mounted on said side-facing of said workfloor.

3. A load transfer platform as claimed in claim 2, characterised in that said first set comprises at least two beams each of said beams being provided with said cushion.

4. A load transfer platform as claimed in any one of the claims 1 to 3, characterised in that said first connection means are formed by a protrusion extending towards said workfloor and mounted on said longitudinally extending beams, said second connection means being formed by a cavity applied on a carrying element of said wheelset, said protrusion and said cavity mating each other.

5. A load transfer platform as claimed in any one of the claims 1 to 4, characterised in that said beams of said first set comprise a substantially rectangular shaped hollow chamber extending over a substantially whole length of the beam, said chamber extending between a first and a second substantially U-shaped anchorage element, wherein said first and second anchorage elements are provided for receiving a clamping unit which is provided for clamping said beams of said first and second set to each other.

6. A load transfer platform as claimed in any one of the claims 1 to 5, characterised in that said beams of said second set comprise a first subset of substantially H-shaped beams and a second subset of beams shaped according to a pattern formed by a juxtaposition of two substantially H-shapes.

7. A load transfer platform as claimed in any one of the claims 1 to 6, characterised in that said wheelset comprises a first and a second wheelsubset pivotally and longitudinally mounted on a first carrying arm, which is pivotally mounted on a carrying element provided with said first connection means.

8. A load transfer platform as claimed in any one of the claims 1 to 7, characterised in that it comprises a storage unit provided for storing said wheelset when disconnected from said frame.

9. A load transfer platform as claimed in any one of the claims 1 to 8, characterised in that said beams are manufactured in extruded aluminium.
